# EUROPEAN PATENT APPLICATION

(11) **EP 1 956 818 A1**
(43) Date of publication of application: **13.08.2008**
(21) Application number: 06822592.9
(22) Date of filing: 30.10.2006
(51) Int. Cl.: H04M 3/56, H04Q 7/38

(54) **PoC SERVER AUTOMATIC-SEARCH METHOD, QUALITY ADJUSTING METHOD, AND COMMUNICATION SYSTEM USING THESE METHODS**

(30) Priority: 04.11.2005 JP 2005320795
(71) Applicant: Sharp Kabushiki Kaisha, Osaka-shi, Osaka 545-8522 (JP)
(72) Inventor: EMA, Nobuyuki Lions Mansion Minaminagareyama 309, Chiba, 270-0163 (JP)
(74) Representative: Müller - Hoffmann & Partner
(86) International application number: PCT/JP2006/321635
(87) International publication number: WO 2007/052594

(57) **Abstract**

In conventional services for communicating various media, there are limits to the number of users, the number of group lists, and the like that can be handled by servers provided by communication providers. A service system includes a server provider network 4 in addition to communication provider networks 1 to 3, and the communication provider networks 1 to 3 and the server provider network 4 are configured to be able to communicate with a PoC domain server 2 through the Internet 1. A server provider network (4) 3D having a PoC server 3D-1 and a GL server 3D-2 is also added. The user can receive services of PoC and the like from a terminal device 6 by automatically searching another server such as a server 3B-1 when users beyond the capability of a server 3A-1 simultaneously try to communicate.

## Description

### Technical Field

The present invention relates to a communication technology for communicating media information such as text data, voice data, and moving image data through a server using a network.

### Background Art

In recent years, due to the spread of the Internet and the progress in wireless communication networks, communication providers of cell phone and the like have begun to provide services for communicating various media on IP networks.

These services include chat services based primarily on text data and PoC services based primarily on voice data. In either case, services that include a method, for offering a convenience to the user are provided in which connection destination information (a group list or the like) is listed through a server, the user selects a connection destination, and the communication is started.

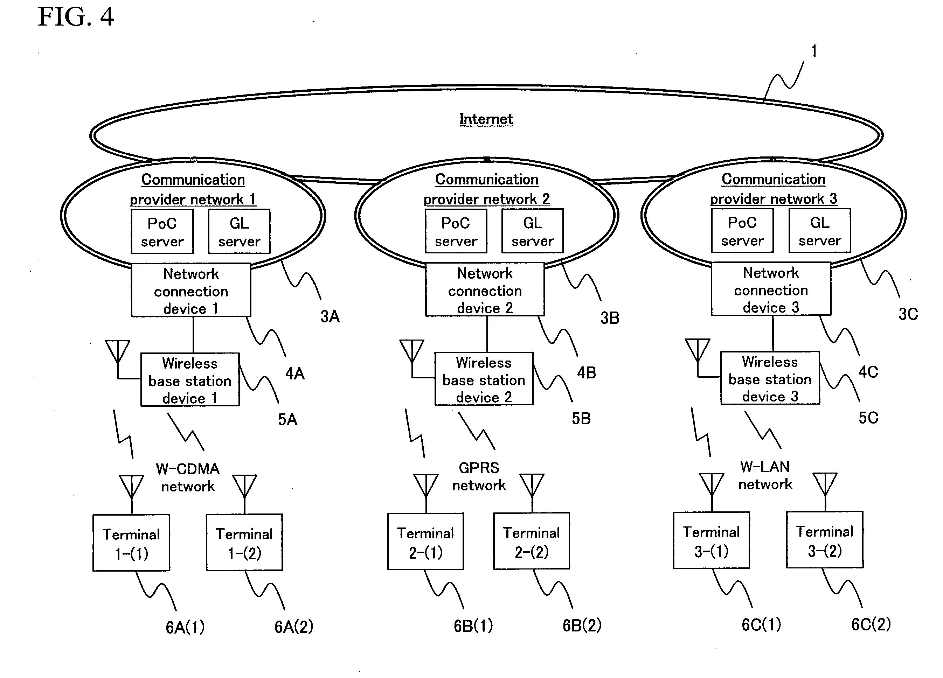

Figure 4 is a functional block diagram showing a general service system configuration example. As shown in Figure 4, terminal devices 1-(1), 1-(2), ... 3-(2) (6A(1), 6A(2), ... 6C(2)) are terminals connected to networks using wireless networks provided by communication providers. As shown in Figure 4, as for the wireless networks, networks 3A, 3B, and 3C provided by the communication providers are often different, such as a W-CDMA network, a GPRS network, and a W-LAN network, depending on the communication providers.

The communication providers permit access to communication provider networks (1 to 3) 3A to 3C provided by communication enterprises through wireless base station devices (1 to 3) 5A to 5C and network connection devices (1 to 3) 4A to 4C.

A PoC server and a GL server are installed on each of the communication provider networks (1 to 3) 3A to 3C, and each terminal device receives services by accessing the PoC server and the GL server, acquiring a group list, and performing a connection process for starting the PoC services.

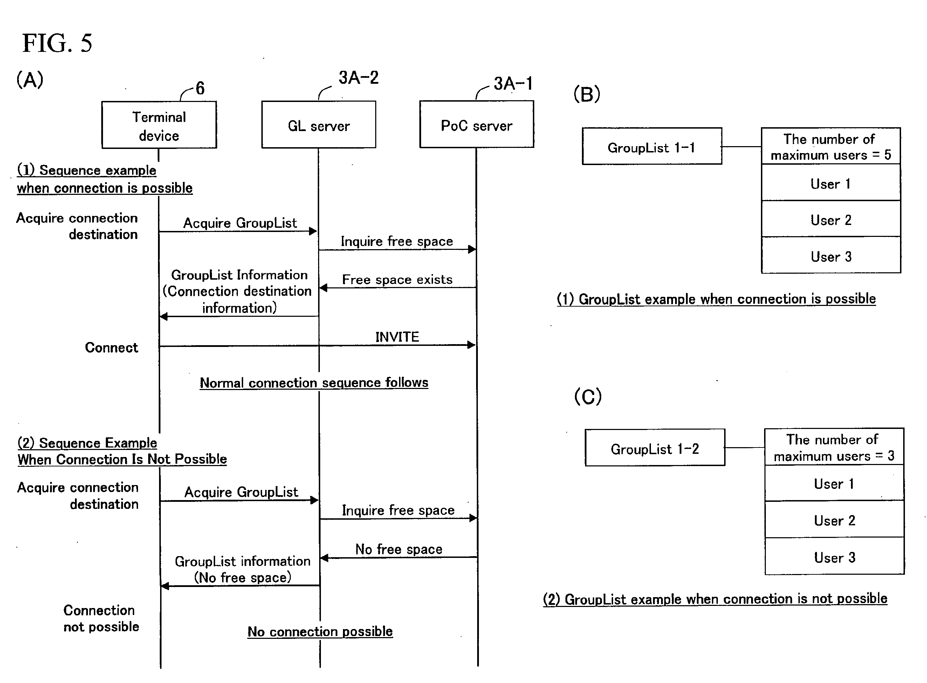

Figure 5 is a sequence diagram of a connection destination acquisition process in the system shown in Figure 4. As shown in Figure 5, in a sequence example when the connection is possible, a terminal device 6 requests acquisition of a group list to a GL server 3A-2, and the GL server 3A-2 queries a PoC server 3A-1 for free space. When the connection is possible, the PoC server 3A-1 responds to the GL server 3A-2 that there is a free space, and the GL server 3A-2 transmits connection destination information to the terminal device 6. The connection is made based on this. When the connection is not possible, a response indicative of no free space is returned. Figure 5(B) is a group list example when the connection is possible, and since the number of currently connected users is 3 while the number of maximum users is 5, there is a free space. Figure 5(C) is a group list example when the connection is not possible, and since the number of currently connected users is 3 while the number of maximum users is 3, there is no free space.

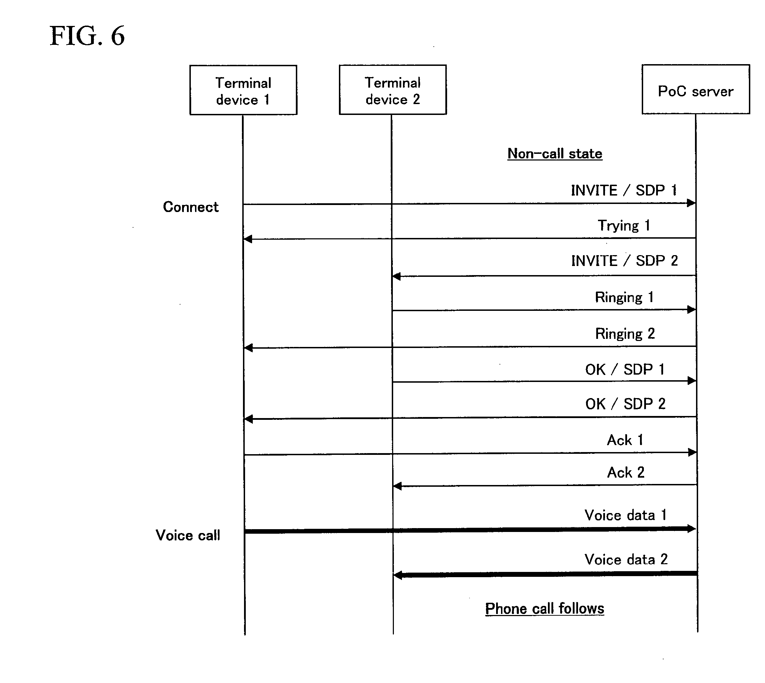

Figure 6 is a diagram showing a sequence example of PoC connection. Hereinafter, when a plurality of terminal devices 6 exist, the terminal devices 6 are denoted as terminal devices (1) 6A-1, (2) 6A-2, and so forth. With reference to Figure 6, a PoC connection sequence example between the terminal device (1) 6A-1, the PoC server 3A-1, and the terminal device (2) 6A-2 in the above configuration will be described. However, the description in relation to a message transmitted and received between the terminal devices and the PoC server is omitted, and only a message related to the quality or the like will be focused and described.

As shown in Figure 6, an INVITE signal transmitted from the terminal device (1) 6A-1 reaches the terminal device (2) 6A-2 through the PoC server 3A-1. At this point, SDP (Session Description Protocol) information including parameters, such as Ptime, that defines the length of voice data is provided. Subsequently, an OK signal is returned from the terminal device (2) 6A-2 to the terminal device (1) 6A-1 through the PoC server 3A-1. The SDP information is also included at this point.

The PoC server 3A-1 changes the values of the information related to the quality, such as Ptime of the SDP information transmitted from the terminal device (1) 6A-1 and the SDP information transmitted from the terminal device (2) 6A-2, in accordance with optimal values within the same communication provider network and the voice data conversion capability of the PoC server 3A-1.

The terminal device (1) 6A-1 transmits voice data 1 in accordance with parameter values included in the SDP information, and the PoC server 3A-1 converts part of the voice data and transmits the voice data to the terminal device (2) 6A-2, thereby enabling to maintain a certain quality. Although an example has been described herein in which the signal is transmitted in the order of terminal device (1) 6A-1 → PoC server 3A-1 → terminal device (2) 6A-2, voice data transmitted in the order of, for example, terminal device (2) 6A-2 → PoC server 3A-1 → terminal device (1) 6A-1 can be considered in a similar way.
Non-Patent Document 1: OMA Push to talk over Cellular (PoC) Architecture Candidate Version 1.0 (OMA-AD_PoC-V1_0-20051006-C), URL: http://www.openmobilealliance.org/release_program/poc-v1_0.html

### Disclosure of the Invention

### Problems to be Solved by the Invention

In conventional services for communicating various media, there are limits to the number of users, the number of group lists, and the like that the servers provided by communication providers can handle. The user cannot receive services when users beyond the capability of the servers simultaneously try to communicate.

Furthermore, in order to communicate information, such as a group list, between different communication providers, a roaming agreement needs to be signed in advance between the different communication providers, address information of a GroupList server, a PoC server, or the like needs to be exchanged in advance, and the sequential establishment of environments allowing mutual operations of services is needed.

Moreover, when the PoC services are provided using PoC servers installed on different communication provider networks, data jitters or the like are changed because the distances between the terminal devices and PoC servers in networks are changed. Therefore, in the case of voice data, there was a problem that voice discontinuity or noise was generated, thereby degrading the service quality.

The object of the present invention is to solve the problems caused by differences between communication providers.

### Means for Solving the Problems

One aspect of the present invention provides a communication system characterized by comprising a plurality of communication provider network systems, each of the communication provider network systems including: a GroupList server (GL server) that provides a group list related to terminal devices belonging to the communication provider network system; and a PoC server that exchanges information related to registration of the group list and existence of free space for terminal devices, the plurality of the communication provider network systems connected through a network, the communication system further comprising a PoC domain server connected to the network and performing communications across the GL servers belonging to the plurality of communication provider network systems, the communications including registration of group list information and querying.

This allows the user to receive services of PoC and the like from a terminal device by automatically searching another server when users beyond the capability of a server simultaneously try to communicate.

Also provided is a PoC domain server used for a communication system comprising a plurality of communication provider network systems, each of the communication provider network systems including: a GL server that provides a group list related to terminal devices belonging to the communication provider network system; and a PoC server that exchanges information related to registration of the group list and existence of free space for the terminal devices, the plurality of communication provider network systems connected through a network, the PoC domain server connected to the network and performing communications across the GL servers belonging to the plurality of communication provider networks, the communications including registration of group list information and querying.

Another aspect of the present invention provides a communication method in a communication system, the communication system comprising a plurality of communication provider network systems, each of the communication provider network systems including: a GL server that provides a group list related to terminal devices belonging to the communication provider network system; and a PoC server that exchanges information related to registration of the group list and existence of free space for the terminal devices, the plurality of communication provider network systems connected through a network, the communication method characterized by comprising: a step of the GL server in each communication provider network system registering in advance as a GL server with a PoC domain server installed on the network; and a step of querying another PoC server for a free space in response to a request for acquiring a group list from the terminal device to the GL server, acquiring a response, requesting the PoC domain server to acquire a domain when the connection to the another PoC server is not possible, and the PoC domain server receiving domain information of a selected GL server based on the registration.

Preferably, the communication method comprises a step of returning the group list from the another GL server to the terminal device with reference to connection destination information generated based on the domain name of the PoC server that has performed querying and based on existing user information registered in the group list, when, in response to the query of free space to the another GL server based on the acquired domain information, the query is relayed from the another GL server to the PoC server in the communication provider network system to which the GL server belongs and the response indicative of free space is returned.

### Advantages of the Invention

The present invention facilitates the user to receive services of PoC and the like from a terminal device by automatically searching another server when users beyond the capability of a server simultaneously try to communicate.

The present invention also enables to exchange in advance address information of GroupList servers, PoC servers, and the like through the PoC domain server for execution between different communication providers and enables to receive services from different communication providers and server providers without undergoing the procedure of roaming agreement and the like.

Furthermore, the present invention adjusts information of jitter amount and the like between PoC servers in advance, thereby enabling to minimize the quality degradation when PoC servers of different communication providers and server providers are used.

### Brief Description of the Drawings

Figure 1 is a diagram showing one configuration example of a communication system according to one embodiment of the present invention;
Figure 2 is a diagram showing a sequence example of connection destination acquisition according to the present embodiment;
Figure 3 is a diagram showing a sequence example of PoC connection according to the present embodiment;
Figure 4 is a diagram showing a general system configuration example;
Figure 5 is a diagram showing a sequence example of general connection destination acquisition; and
Figure 6 is a diagram showing a general PoC connection sequence example.

### Description of Symbols

1.. Internet
2.. PoC domain server
3A/3B/3C/3D ... communication provider networks 1 to 3, and server provider network 4 (including PoC server and GL server)
4A/4B/4C ... network connection devices 1 to 3
5A/5B/5C ... wireless base station devices 1 to 3
6A(1)/6A(2) ... terminal devices 1-(1) and 1-(2)
6B(1)/6B(2)... terminal devices 2-(1) and 2-(2)
6C(1)/6C(2)... terminal devices 3-(1) and 3-(2)

### Best Mode for Carrying Out the Invention

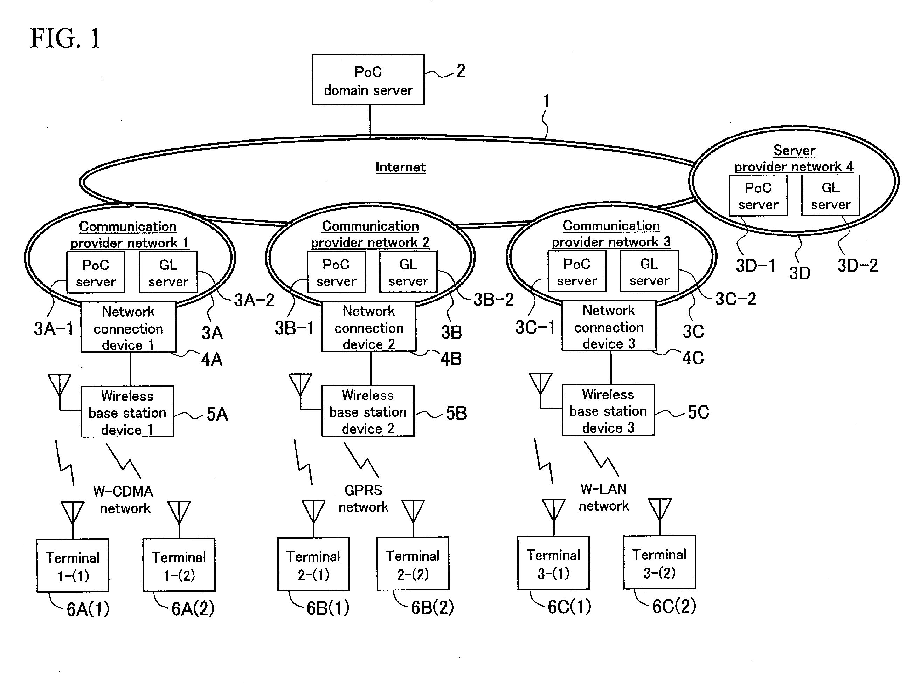

A service system according to one embodiment of the present invention will now be described with reference to the drawings. One configuration example of the service system according to one embodiment of the present invention is shown in Figure 1. Similar components as in Figure 4 are designated with the same reference numerals. As shown in Figure 1, the configuration of the service system according to the present embodiment is different from the configuration shown in Figure 4 in that the service system includes a server provider network 4 in addition to the communication provider networks 1 to 3, and that the communication provider networks 1 to 3 and the server provider network 4 are configured to be able to communicate with the PoC domain server 2 through the Internet 1. While the communication provider networks 1 to 3 are connected to the terminals 6A to 6C through the network connection devices 1 to 3 and the wireless base stations 5A to 5C, the server provider network 4 is connected to the communication provider networks 1 to 3 through the Internet 1 and connected to the terminals 6A to 6C through the communication provider networks 1 to 3. A server provider network (4) 3D having a PoC server 3D-1 and a GL server 3D-2 is also added.

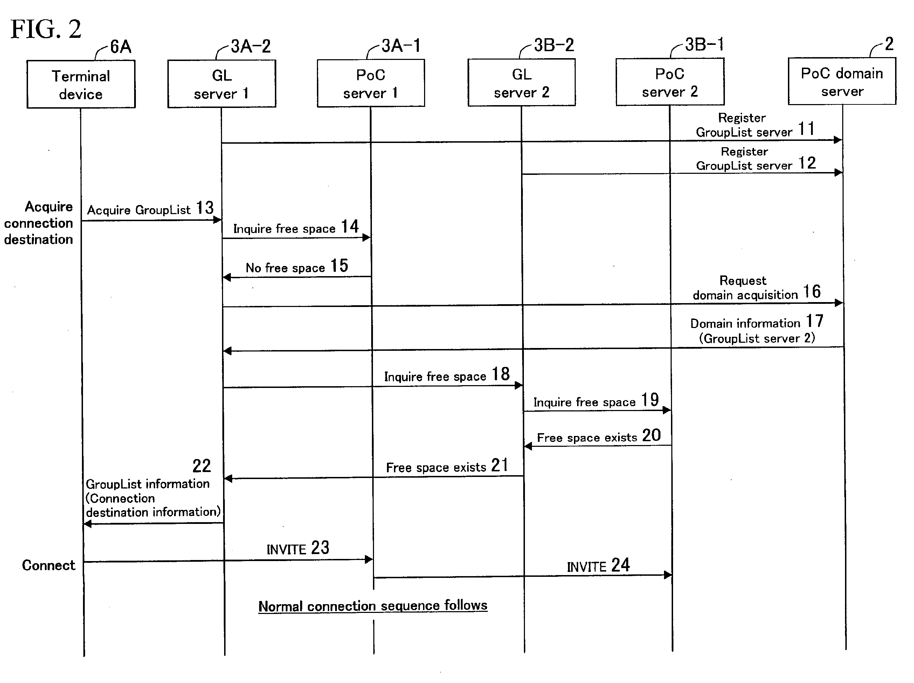

Figure 2 is a diagram showing a connection destination acquisition sequence example in the service system according to the present embodiment. The GL servers (1 and 2) 3A-2 and 3B-2 in the communication providers are registered in advance as GroupList servers to the PoC domain server 2 installed on the Internet 1 (11). In Figure 2, the GL server (1) 3A-2 is first registered, and then the GL server (2) 3B-2 is registered (12).

Subsequently, the terminal device 6A transmits a GroupList acquisition request to the GL server (1) 3A-2 (13). In response, the GL server (1) 3A-2 first queries the PoC server (1) 3A-1 for free space (14), and then the PoC server (1) -13A-1 returns a response indicative of no free space (15).

Subsequently, recognizing that no connection to the PoC server (1) 13A-1 is possible, the GL server (1) 3A-2 transmits a domain acquisition request to the PoC domain server 2 (16). The PoC domain server 2 selects a pre-registered GL server and returns domain information (17) (domain information for accessing the GL server (2) 3B-2, herein).

The GL server (1) 3A-2 queries, for example, the GL server (2) 3B-2 for free space based on the acquired domain information (18), and the query is relayed from the GL server (2) 3B-2 to the PoC server (2) 3B-1 (19).

When there is a free space in the PoC server (2) 3B-1, a response indicative of free space in the GL server (2) 3B-2 is returned from the PoC server (2) 3B-1 (20) and relayed to the GL server (1) 3A-2 (21).

The GL server (2) 3B-2 generates connection destination information based on the domain name of the PoC server that has queried and existing user information registered in the group list and then returns the GroupList information to the terminal device 6A (22).

Based on this, INVITE of connection is performed to the PoC server (1) 3A-1 (23), and INVITE of connection is further performed to the PoC server (2) 3B-1 (24). Although an example has been shown above in which the numbers of the GL servers and the PoC servers registered in the PoC domain server 2 are two, the numbers may be more than two. Furthermore, a server provider that provides only the GL servers and the PoC servers can also communicate in a similar procedure because the PoC domain server is installed on the Internet. Similarly, a GroupList server (GL server) 3D-1 that provides a group list related to the terminal devices and a PoC server 3D-2 that exchanges information related to the registration of the group list as well as the existence of free space for the terminal devices can be functioned.

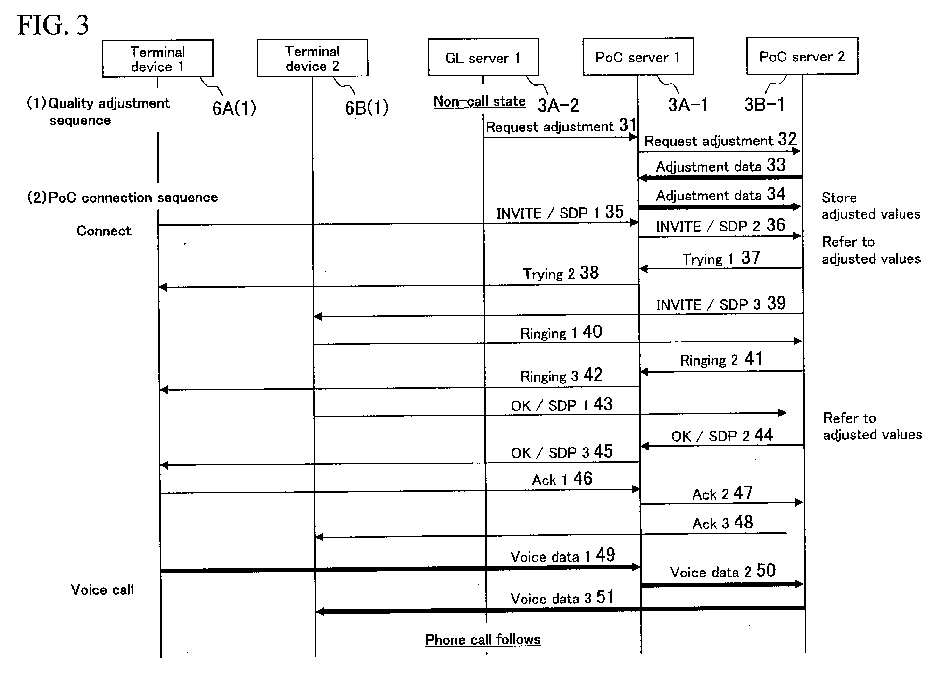

A PoC connection sequence example according to the present embodiment will be described with reference to Figure 3.

First, a quality adjustment sequence denoted with (1) will be described. Having acquired the group list, the GL server (1) 3A-2 transmits in advance an adjustment request 31 to the PoC server (1) 3A-1, and the adjustment request is relayed to the PoC server (2) 3B-1. The PoC server (2) 3B-1 transmits and receives adjustment data between the PoC server (1) 3A-1 (32 and 33) to thereby measure characteristics (characteristics such as voice data size and jitter) between the PoC server (1) 3A-1 and the PoC server (2) 3B-1 and store the adjusted values (34).

The PoC server (2) 3B-1 changes values of information related to the quality, such as Ptime of SDP information transmitted from the terminal device (1) 6A(1) and SDP information transmitted from the terminal device (2) 6B(1), in accordance with optimal values in the communication provider network, voice data conversion capability of the PoC servers, and the present adjusted values.

For example, the optimal value of Ptime in the communication provider network that the PoC server (1) 3A-1 belongs to is assumed to be 200 ms, the jitter amount is assumed to be 100 ms, the optimal value of Ptime in the communication provider network that the PoC server (2) 3B-1 belongs to is assumed to be 160 ms, the jitter amount is assumed to be 80 ms, and the jitter amount as an adjusted value between the PoC server (1) 3A-1 and the Poc server (2) 3B-1 is assumed to be 120 ms.

Ptime is changed so as to always have a maximum value, while the value of the jitter amount is changed by adding received values.

· SDP of terminal device (1) 6A(1) → PoC server (1) 3A-1
   Ptime = 100 ms, jitter amount = 50 ms
SDP of PoC server (1) 3A-1 → PoC server (2) 3B-1
   Ptime = 200 ms, jitter amount = 50 ms + 100 ms (*1) = 150 ms
   * 1: jitter value in the communication provider that the PoC server (1) 3A-1 belongs to
SPD of PoC server (2) 3B-1 → terminal device (2) 6B(1)
   Ptime = 200 ms, jitter amount = 150 ms + 120 ms (adjusted value) + 80 ms (*2) = 350 ms
*2: jitter value in the communication provider that the PoC server (2) 3B-1 belongs to
   The changes in the value of Ptime and the value of jitter amount can be handled by changing the reference method and the calculation method of the adjusted values in the PoC server (2) 3B-1.

As described above, the present embodiment allows the user to receive services of PoC and the like from a terminal device by automatically searching another server when users beyond the capability of a server simultaneously try to communicate.

The present embodiment also enables to exchange in advance address information of GroupList servers, PoC servers, and the like through the PoC domain server for execution between different communication providers and enables to receive services from different communication providers and server providers without undergoing the procedure of roaming agreement and the like.

Furthermore, the present embodiment adjusts information of jitter amount and the like between PoC servers in advance, thereby enabling to minimize the quality degradation when PoC servers of different communication providers and server providers are used.

In the above embodiment, although an example of PoC services has been described, the present invention is not limited only to the PoC services, but can be widely used for communication services such as chats and moving images.

### Industrial Applicability

The present invention can be utilized as a communication technology for communicating media information such as text data, voice data, and moving image data through a server using a network.

## Claims

1. A communication system **characterized by** comprising a plurality of communication provider network systems, each of the communication provider network systems including: a GroupList server (GL server) that provides a group list related to terminal devices belonging to the communication provider network system; and a PoC server that exchanges information related to registration of the group list and existence of free space for the terminal devices, the plurality of communication provider network systems connected through a network,
the communication system further comprising a PoC domain server connected to the network and performing communications across the GL servers belonging to the plurality of communication provider network systems, the communications including registration of group list information and querying.

2. The communication system according to claim 1, **characterized in that** the GroupList servers in the communication providers are registered in advance as GroupList servers with the PoC domain server installed on the network.

3. The communication system according to claim 1 or 2, **characterized in that** the GL servers, the PoC servers, and other PoC servers exchange quality related adjustment data including quality adjustment requests and quality adjustment data, and the terminal devices negotiate using the quality related adjustment data.

4. A communication system **characterized by** comprising a plurality of communication provider network systems, each of the communication provider network systems including: a GroupList server (GL server) that provides a group list related to terminal devices belonging to the communication provider network system; and a PoC server that exchanges information related to registration of the group list and existence of free space for the terminal devices, the plurality of communication provider network systems connected through a network,
the communication system further comprising a PoC domain server connected to the network and performing communications across the GL servers belonging to the plurality of communication provider network systems, the communications including registration of group list information and querying,
the communication system further comprising a server provider network connected to the communication provider network systems through the network, the server provider network including a GroupList server and a PoC server.

5. The communication system according to claim 4, **characterized in that** the server provider network has a configuration communicable to the terminal devices through the network and the communication provider network system.

6. The communication system according to claim 4 or 5 **characterized in that** the GroupList server in the server provider is registered in advance as a GroupList server with the PoC domain server installed on the network.

7. The communication system according to any one of claims 4 to 6, **characterized in that** the GL server, the PoC server, and other PoC servers exchange quality related adjustment data including quality adjustment requests and quality adjustment data, and the terminal devices negotiate using the quality related adjustment data.

8. A PoC domain server used for a communication system comprising a plurality of communication provider network systems, each of the communication provider network systems including: a GL server that provides a group list related to terminal devices belonging to the communication provider network system; and a PoC server that exchanges information related to registration of the group list and existence of free space for the terminal devices, the plurality of communication provider network systems connected through a network,
the PoC domain server connected to the network and performing communications across the GL servers belonging to the plurality of communication provider networks, the communications including registration of group list information and querying.

9. A communication method in a communication system, the communication system comprising a plurality of communication provider network systems, each of the communication provider network systems including: a GL server that provides a group list related to terminal devices belonging to the communication provider network system; and a PoC server that exchanges information related to registration of the group list and existence of free space for the terminal devices, the plurality of communication provider network systems connected through a network, the communication method **characterized by** comprising:
a step of the GL server in each communication provider network system registering in advance as a GL server with a PoC domain server installed on the network; and
a step of querying another PoC server for a free space in response to a request for acquiring a group list from the terminal device to the GL server, acquiring a response, requesting the PoC domain server to acquire a domain when the connection to the another PoC server is not possible, and the PoC domain server receiving domain information of a selected GL server based on the registration.

10. The communication method according to claim 9, **characterized in that** the GroupList servers in the communication providers are registered in advance as GroupList servers with the PoC domain server installed on the network.

11. The communication method according to claim 9, **characterized by** comprising a step of returning the group list from the another GL server to the terminal device with reference to connection destination information generated based on the domain name of the PoC server that has performed querying and based on existing user information registered in the group list, when, in response to the query of free space to the another GL server based on the acquired domain information, the query is relayed from the another GL server to the PoC server in the communication provider network system to which the GL server belongs and the response indicative of free space is returned.
